# EUROPEAN PATENT APPLICATION

(11) **EP 1 669 128 A1**
(43) Date of publication of application: **14.06.2006**
(21) Application number: 04762036.4
(22) Date of filing: 05.08.2004
(51) Int. Cl.: B01D 71/34

(54) **THE PREPARATION METHOD OF EXO-PRESSURE TYPE POLY(VINYLIDENE FLUORIDE) HOLLOW FIBER MEMBRANE SPINNED UTILIZING A IMMERSION-COAGULATION METHOD AND THE PRODUCT THEREOF**

(30) Priority: 06.08.2003 CN 31402158
(71) Applicant: Zhejiang Omex Environmental Engineering Ltd., Zhejiang 31300 (CN)
(72) Inventor: LI, Xiang, Zhejiang 313000 (CN)
(74) Representative: Lamb, Richard Andrew
(86) International application number: PCT/CN2004/000899
(87) International publication number: WO 2005/014151

(57) **Abstract**

The invention relates to a preparation method of exo-pressure type poly(vinylidene fluoride) hollow fiber membrane spinned utilizing an immersion-coagulation method and the product thereof. The invention is performed mainly through the following steps: dissolving and stirring at a certain temperature to obtain a membrane forming solution; by means of a double-tube orifice, spinning the membrane forming solution together with a composite supporting solution which is in the inner tube of the orifice; after a rapid evaporation, performing the two-stage phase-separating coagulations; after a potch, hydrophilizating the resulted phase inversion membrane; thus, obtaining integrally and continuously the exo-pressure type hollow fiber membrane having double barrier layers and a completely spongy supporting layer. Therefore, the invention is provided with a lot of characteristics, such as the formulation of the membrane forming solution being reasonable, the evaporation and immersion spinning method, the two-stage phase-separation coagulations, and the hydrophilization treatment, as well as the technique for forming membrane integrally and continuously being simple and easy without high restricts to device, the technique process being controlled easily, etc. And the membrane is provided with high compression strength and large water permeation flux, and its property is deteriorated very slowly, and cut-off deposits are difficult to formed on the membrane surface.

## Description

### BACKGROUD OF THE INVENTION

### 1. Field of the Invention

The present invention relates to a method of producing hollow fiber membrane, in particular, the present invention relates to a method of producing an outside-in polyvinylidene fluoride hollow fiber membrane spinned utilizing immersion-coagulation process and a formulation for polymer solution which produces the membrane thereof, comprising high molecular weight polyvinylidene fluoride resin and high proportional organic additives, and relates to a hollow fiber membrane produced by the method and the polymer solution as well.

### 2. Background of the invention

Polyvinylidene fluoride resins (PVDF) have been regarded as one of the most important materials for membrane separation technology, which are excellent in separating property and chemical stability.

In conventional process, polyvinylidene fluoride resins(PVDF) used in accordance with the membrane generally have an average molecular weight(Mw) ranging from 30,000 to 200,000, mostly ensure the prepared hollow fiber membrane having more strength by increasing the weight percent of the PVDF resins in the solution. For example, U.S. Pat. 5,066,401 disclosed membranes which were based on a homogeneous mixture of polyvinylidene fluoride resins. The solution contained 70 to 98 percent by weight of polyvinylidene fluoride. However, increased concentration of the PVDF resins consequentially resulted in high melting temperature (the melting temperature for the solution of the above mentioned membrane is up to be more than 240°C). This has a disadvantage of untimely secondary effect of thermally induced phase separation, which will certainly influence the structure of the prepared membrane. On the other hand, such hollow fiber membrane prepared by the method has desirable strength in some measure, but the porosity is unfortunately low. Especially while the polymer melted with higher temperature, more gas and cavity is discharged which results in higher density of the solution and lower porosity and large pore size (the average pore size of the above mentioned prepared membrane is 0.45 µ m).

However, PVDF is one kind of hydrophobic resin, so it tends to form hydrophobic dense skins while formation. Furthermore, lower molecular weight PVDF resins usually means larger pore size, and higher molecular weight PVDF resins usually means smaller pore size of the prepared membrane. Many PVDF membrane were reported on the literatures, such as flat porous membrane, hollow fiber inside-out membrane, etc., most of these membranes have nominal pore size in the range of 0.1 µ m -0.45 µ m, and the structure of cross-sectional supporting layer mostly includes bidirectional macroporous of finger-structure and needle-structure, directional macroporous of finger-structure, or partial macroporous of finger-structure, and the like, throughout the cross-section of membrane.

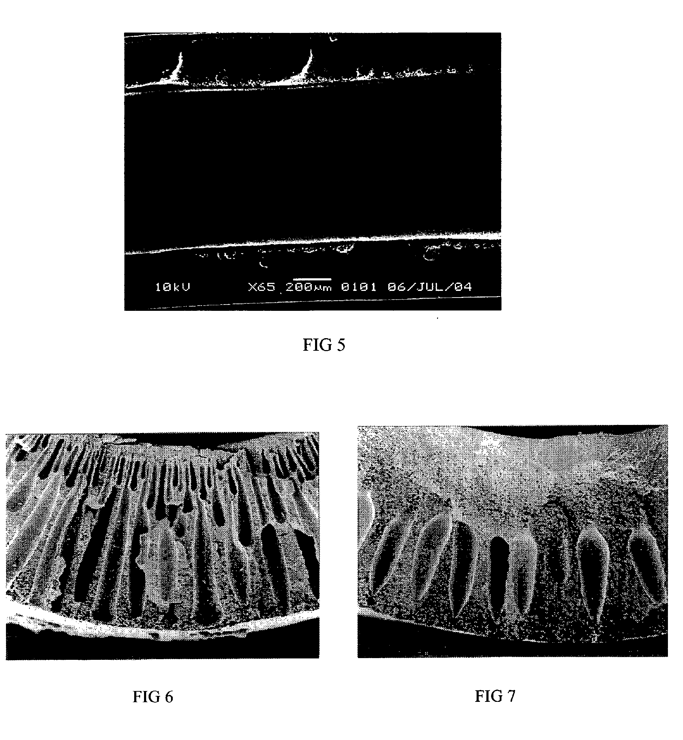

Asymmetrical membrane usually comprises of porous supporting layer and thin skins, there will be observed macroporous of finger-structure, needle-structure throughout the said supporting layer result from liquid-liquid phase separation (shown in Fig.6 and Fig.7), however, macroporous structure will obviously be disadvantageous for the prepared membrane, there will be weak parts in the prepared membrane and which will be even easy to be deposition while filtration application.

Though porous PVDF hollow fiber membranes prepared by conventional process have skin layers, but its macropore of the supporting layer will damage the mechanical strength (as an example of Japanese patent of JP 1-22003B). Another Japanese patent JP 54-16832A disclosed a method of PVDF membrane with uniform pore size, which included dissolving polyvinylidene fluoride resins in acetone. Acetone has low boiling point of 56.5°C, and is not a good solvent for PVDF resins, the resins must be heated nearly to its boiling point so as to be dissolved completely, such undesirable thermal history will consequently influence and damage the stability of the mixed polymer solution which will tend to form gel at room temperature, furthermore, such solution using acetone as solvent usually with lower concentration of PVDF resins and lower viscosity, which can not form a self-supporting hollow fiber membrane.

In order to improve process technique ,an application for a method of PVDF hollow fiber porous membrane is filed for a Chinese patent (App. No. 95117497.5) disclosed a method of forming PVDF hollow fiber membrane with macropore, high permeability and asymmetrical structure, via wet-dry process, of which the polymer solution included the following substances: polyvinylidene fluoride 15-25 wt%, nonsolvent 0.5 -5 wt%, surfactant 1-10 wt%, high molecular pore-forming agent 1-20 wt% and solvent 40-82.5 wt%.

And a further Chinese patent application (No.98103153.6) was filed for a method of PVDF hollow fiber porous membrane and the product thereof, which disclosed a method for preparing PVDF hollow fibre porous membrane via dry-wet method, and then the prepared membrane was stretched with the stretch ratio controlled at 60-300%. Said porous membrane had 0.1-1µm of nominal pore size, 300-1000 L/ m2.h (0.1 MPa) of purified water throughput and 70-90% of porosity.

All of these known hollow fiber membranes have the disadvantages that the compressive strength will easily be influenced during applications, and contamination will easily be deposited on the surface of the membrane, and the membrane performance will attenuation. Furthermore, due to surface tension of the water, the ultrafiltration membrane manufactured by conventional technique which mostly have such micropore that the water flux is lower, and limits their application in the field of water treatment.

### SUMMARY OF THE INVENTION

The present invention is to solve the problem of the conventional technique that the proportion of lower molecular weight PVDF resins is unsuitable for preparing polymer solution, the preparing process is too complicated, and is also to solve the problem of the conventional technique that water permeability of the prepared membrane is not high enough, the problem of undesirable mechanical properties, undesirable permeability stability and short service life, due to macroporous finger-structure supporting layer of the prepared membranes for higher water flux.

It is an object of the present invention to provide a polymer solution formulation which produces the membrane thereof, comprising high molecular weight polyvinylidene fluoride resin and high proportional organic additives (as pore-forming agent), and a method of producing an outside-in PVDF hollow fiber membrane spinned utilizing immersion-coagulation process.

It is another object of the present invention to provide a microporous outside-in PVDF hollow fiber ultrafiltration membrane, which has asymmetrical structure with opposite inner and outer skins, and has porous supporting layer of sponge-structure network, and the said porous supporting layer is not macroporous throughout the cross-section.

According to the present invention, a method to prepare a microporous outside-in PVDF hollow fiber membrane which is spinned by immersion and coagulation,comprises:
a. preparing polymer solution by introducing the following material into a mixer, dissolving and stirring it at a certain temperature:

| | |
|---|---|
| Polyvinylidene Fluoride | 18-25%(wt); |
| Organic additives | 22-25%(wt); |
| Inorganic additives | 0.5-5.0%(wt); |
| Solvent | 59.5-45.0%(wt). |

b. extruding the said solution through outer tube of a double tube spinneret, and lumen forming composition liquid through inner tube of the same simultaneously;
c. obtaining original fiber membrane by introducing and immersing the extruded polymer solution as well as the lumen liquid into a first stage coagulation bath, and consequently into a second coagulation bath after quick evaporization, wherein a precipitation takes place via phase inversion in the said two baths respectively;
d. passing the original fiber membrane through a rinsing bath, subjecting it to hydrophilic rendering; then an outside-in hollow fiber with double skins and complete spongy network is prepared.

As polyvinylidene fluoride resins from which the microporous hollow fiber membrane of the present invention is prepared, there are high molecular weight vinylidene fluoride homopolymers, it is much helpful to ensure the mechanical properties of the prepared membrane, and to avoid the problem such as bad melting flowability and moldability due to high concentration of PVDF resin. On the other hand, the use of such polyvinylidene fluoride resins combined with higher proportional organic additives (which acts as pore-forming agent) has solved the problem which will effect the properties of the prepared membrane, and created a good condition for preparing the said membrane according to the present invention.

According to the present invention the weight molecular weight(Mw) of the polyvinylidene fluoride resins ranges from 400,000 to 800,000 daltons, and a characteristic viscosity ranges from 1.65-2.00.

Preferably, the molecular weight(Mw) ranges from 500,000 to 700,000 daltons, and a characteristic viscosity ranges from 1.75-1.85. If there is more than one kind of PVDF resins, the total amount shall be constant.

According to the present invention, while the polymer solution is prepared, and is extruded through a double tube spinneret, after quick evaporation(preferably 0.02-0.2 seconds), subsequently the resulting extrudate is immersed in at least a coagulating bath where a exchange between the coagulating liquid and the solvent happens simultaneously on the both surfaces of outside and inside of the original fiber. The exchange on the both surfaces interact each other and will consequently influence the final structure of the prepared fiber.

According to the present invention, the lumen forming composition liquid consists of 10-80% by weight of solvent of PVDF resins, 5-30% by weight of alcohol and polyalcohol, 0.5-5% by weight of surfactant, and other is deionized water.

According to the present invention, the method including control the solvent exchange rate of the inside skin, decrease the precipitation velocity so as to avoid macropore and neckdown phenomenon resulted from the viscosity of the lumen liquid while traction.

According to the present invention, the method also including the resulting extrudate is then immersed into two stage coagulating bath, so as to control the solvent exchange rate of the outside skin of the original fiber, for a time of 1.5s to 4.0s in the first bath containing 40-80% by weight of solvent, and then into the second bath containing 5-30% by weight of solvent for 4s to 120s, for the purpose of delaying phase separation. It is very important to ensure that the exchange rate of the inside skin(the lumen forming liquid) is faster than that of the outside one.

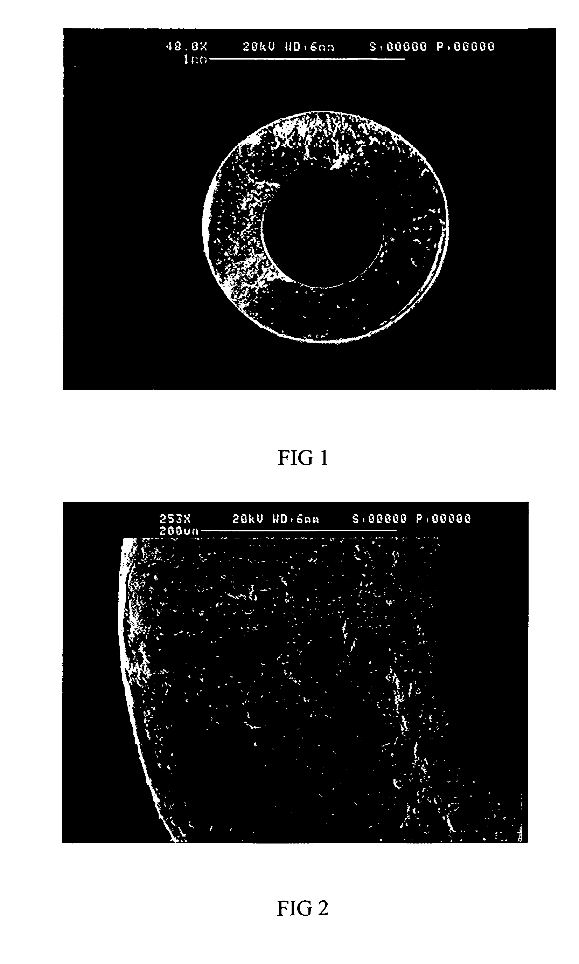

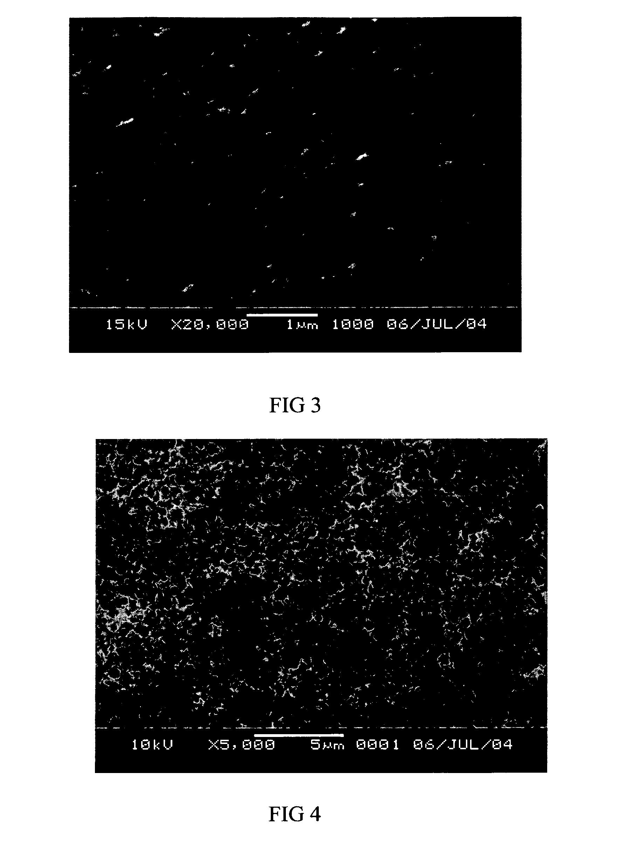

According to the present invention, a microporous outside-in PVDF hollow fiber ultrafiltration membrane is prepared with partial cross-section of gradually increscent sponge network porous from outside skin to inside (as shown in Figs.1-5).It solves the problem that there are macropore in the structure of the hollow fiber prepared by conventional technology.

According to the present invention, the kinds and concentration of additives are also key factors for the property of the prepared fiber. For various polymer solution systems, there are large difference of influence with same additives, more molecular weight of additive such as polyvinylpyrrolidone (PVP) etc. always means macropore, which can change molecular crosslinking degree of the solution, and less molecular weight additive such as lithium chloride etc. means micropore. The additive with less molecular weight can enter the voids between the molecule chain of polymer and is introduced to the functional groups, which improve the stability of the prepared fiber. Generally, suitable ratio of various additives will be helpful to obtain desirable pore diameter pattern and improved flux of the prepared fiber.

According to the present invention, besides the above mentioned factor which will affect the properties of the prepared fiber, the pore-forming agent also takes much relation with the pore diameter pattern. Partially the agent acts as filler of the voids among the polymer solution. During the coagulation process of the extruded fiber, the pore-forming agent will be extracted, and while the agent and solvent diffuse and exchange, voids form throughout the fiber. To obtain fiber with desirable porosity and pore diameter, it is important to control the concentration of the pore-forming agent and diffusion velocity of the same.

Preferably, the said organic additive consists of at least two of the groups of polyvinylpyrrolidone, polyethylene glycol, polyvinyl alcohol, Tween and Triton. If the additives are more than two kinds, the total amount is constant.

According to the present invention, the polymer solution comprises 22-25% by weight of the said organic additive. Preferably, the said organic additive is polyvinylpyrrolidone having a molecular weight ranging from 11,000 to 1,000,000 daltons.

According to the present invention, the said inorganic additive is selected one or two from the group comprising lithium chloride, lithium nitrate and sodium acetate solution. If the additives are more than two kinds, the total amount is constant.

According to the present invention, the said solvent is selected one or two from the group comprising N-Methyl Pyrrolidone, dimethylformamide, dimethy lacetamide, dimethyl sulfoxide and triethyl phosphate. If the solvent is more than two kinds, the total amount is constant. The results of the said solvent show formation of the original skins which are helpful to improve exchange rate of the said solvent.

According to the present invention, the said lumen forming liquid is a mixture comprising 10-80% by weight of solvent of PVDF, 5-30% by weight of alcohol and polyalcohol, 0.5-5% by weight of surfactant and other is deionized water.

According to the present invention, the evaporating time before phase separation is preferably ranging from 0.02s to 0.2s; the said first stage coagulating bath preferably comprises 40-80% by weight of solvent of PVDF resin in which the time of coagulation is 1.5s to 4.0s; and the said second stage bath preferably comprises 40-80% by weight of solvent of PVDF resin in which the time of coagulation is 4.0s to 120s.

According to the present invention, the said hydrophilic agent is selected at least one or more from the group comprising 10-80% by weight of propanetriol, 0.05-5% by weight of hydroxypropyl cellulose and 0.5-5% by weight of Triton.

According to the above mentioned process, a microporous outside-in PVDF hollow fiber ultrafiltration membrane prepared, has double skins which are internal and external in which said external skin is denser than said internal one, and a complete sponge network supporting layer of the cross-section between the internal and external.

The microporous hollow fiber membrane according to the present invention has an norminal pore diameter ranging from 0.01 µm to 0.06 µm.

Furthermore, the microporous hollow fiber membrane according to the present invention has porosity of 70%-85%, compressive strength of more than 0.5Mpa, and pure water flux per unit wall thickness of 150 to 800L/m2.h.25°C.1bar.

As above described, compared with conventional technique, the method of preparing a microporous hollow fiber membrane of the present invention, including said integrated and continuous process of evaporation, immersed spinning, two stage phase separation and coagulation, hydrophilic rendering, is simple and feasible. The resulting membrane has properties of high compressive strength, high flux, high contamination removal ability, and high performance stability. The membrane of the present invention are useful in a variety application such as biochemical, food, medical, brewing and purifying industry, and domestic application as well.

### BREIF DESCRIPTION OF THE DRAWINGS

FIG 1 is an electron micrograph of a cross-section of a hollow fiber membrane according to the present invention;
FIG.2 is an electron micrograph of a part cross-section of a hollow fiber membrane according to the present invention;
FIG.3 is an electron micrograph of the external skin of a hollow fiber membrane according to the present invention;
FIG.4 is an electron micrograph of the sponge-structure supporting layer of a hollow fiber membrane according to the present invention;
FIG.5 is an electron micrograph of a longitudinal section of a hollow fiber membrane according to the present invention;
FIG.6 is an electron micrograph of a cross section of a conventional hollow fiber membrane;
FIG.7 is another electron micrograph of a cross section of a conventional hollow fiber membrane.

### DESCRIPTION OF THE PREFERRED EMBODYMENT

The invention is further described by examples and combining with figures as following.

### EXAMPLE 1

As shown in Table 1, 18% by weight of polyvinylidene fluoride resin (FR904 as trade name available from Shanghai 3F company) having a molecular weight of 800,000 daltons and a characteristic viscosity of 1.95; 12.5% by weight of polyvinylpyrrolidone having a molecular weight of 45,000 daltons (PVP K-30 as trade name available from Shanghai Shenpu Co.); 8% by weight of PEG-600 (imported from Japan); 1.5% by weight of Tween-80 (imported from Japan); 0.5% by weight of lithium nitrate; 29.5% by weight of N-Methyl Pyrrolidone (available from Shanghai chemical reagent Co.); and 30% by weight of dimethylacetamide (available from BASF Co.) were added in order and blended together in a mixer. The resultant blend was melted stirring at 85°C ,and continuously degassing to be homogenous dope. The resultant solution was then extruded through outer tube of a double tube spinneret while holding the temperature of 80°C and co-extruded with the lumen forming liquid through inner tube of the same simultaneously. The said lumen forming liquid consists of 50% by weight of solvent of PVDF, 8% by weight of alcohol and polyalcohol, 5% by weight of surfactant and 37% by weight of deionized water (shown in Table 3). The resulting extrudate was evaporated while passing it through the air for a short time of 0.1s, passed through the first stage coagulating bath for 4s, which containing 40% by weight of solvent of PVDF resin, and then through the second stage coagulating bath containing 5% by weight of solvent of PVDF resin for 60s by traction. The hollow fiber-shaped extrudate thus obtained was subsequently subjected to water washing, hydrophilic rendering with which the composition of 50% by weight of propanetriol, 0.1% by weight of hydroxypropyl cellulose and 1.0% by weight of Triton (shown in Table 2) and drying. Finally, the prepared hollow fiber membrane was taken up on the gathering wheel.

The prepared hollow fiber membrane, out-to-in, has external skin 1, complete sponge-structure supporting layer 2 and internal skin 3 respectively, in the cross-section. (shown in Figs.1,2,3,4,5).

The microporous hollow fiber membrane of the present invention had an outer and inner diameter of 1.25mm, 0.65mm respectively, an average pore diameter of 0.045 µ m, and a porosity of 75%. The compressive strength of the microporous hollow fiber membrane was 0.5Mpa, and the purity water flux per unit wall thickness was 450L/m2.h.25 °C .1 bar.

### EXAMPLE 2~10

Example 1 was repeated to prepare a microporous hollow fiber membrane except for various blend components and technique parameters used which were shown in Table 1,2,3, respectively. And the propertie of the prepared membrane was shown in Table4.

### EXAMPLE 11

18% by weight of polyvinylidene fluoride resin (FR904 as trade name available from Shanghai 3F company) having a molecular weight of 800,000 daltons; 12.0% by weight of polyvinylpyrrolidone having a molecular weight of 45,000 daltons (PVP K-30 as trade name available from Shanghai Shenpu Co.); 0.5% by weight of polyvinylpyrrolidone having a molecular weight of 1,000,000 daltons (available from Nanjing Jinlong Co.); 8% by weight of PEG-600 (imported from Japan); 1.5% by weight of Tween-80 (imported from Japan); 0.5% by weight of lithium nitrate; 29.5% by weight of N-Methyl Pyrrolidone (available from Shanghai chemical reagent Co.); and 30% by weight of dimethylacetamide (available from BASF Co.) were added in order and blended together in a mixer. The resultant blend was melted stirring at 85°C ,and continuously degassing to be homogenous dope. The resultant dope was then extruded through outer tube of a double tube spinneret while holding the temperature of 80°C and co-extruded with the lumen forming liquid through inner tube of the same simultaneously. The resulting extrudate was evaporated while passing it through the air for a short time of 0.05s, passed through the first stage coagulating bath for 3s, which containing 45% by weight of solvent of PVDF resin, and then through the second coagulating bath containing 10% by weight of solvent of PVDF resin for 80s. The hollow fiber-shaped extrudate thus obtained was subsequently subjected to water washing, hydrophilic agent rendering (shown in Table 2) and drying. Finally, the prepared hollow fiber membrane was taken up on the gathering wheel.

The prepared hollow fiber membrane, out-to-in, has external skin 1, complete sponge-structure supporting layer 2 and internal skin 3 respectively, in the cross-section. (shown in Figs. 1,2,3,4,5).

The microporous hollow fiber membrane of the present invention had an outer and inner diameter of 1.25mm, 0.65mm respectively, an average pore diameter of 0.045 µm, and a porosity of 78%. The compressive strength of the microporous hollow fiber membrane was 0.5Mpa, and the purity water flux per unit wall thickness was 450L/m2.h.25°C.1bar.

The properties of the prepared hollow fiber membrane were shown in Table 4.

### EXAMPLE 12

Example 1 was repeated to prepare a microporous hollow fiber membrane except for 20.5% by weight of polyvinylidene fluoride resin (1700 as trade name available from Kureha in Japan,) having a molecular weight of 500,000 daltons; 9.5% by weight of polyvinylpyrrolidone having a molecular weight of 45,000 daltons (PVP K-30 as trade name available from Shanghai Shenpu Co.); 12% by weight of PEG-400 (imported from Japan); 1.0% by weight of Tween (imported from Japan); 0.5% by weight of lithium chloride; 56.5% by weight of dimethylacetamide (available from BASF Co.,).

The resulting extrudate was evaporated while passing it through the air for a short time of 0.02s, passed through the first stage coagulating bath for 1.5s, which containing 60% by weight of solvent of PVDF resin, and then through the second coagulating bath containing 30% by weight of solvent of PVDF resin for 30s.

The prepared hollow fiber membrane has double skins which are internal and external, and a complete sponge-structure supporting layer in the cross-section.

The microporous hollow fiber membrane of the present invention had an outer and inner diameter of 1.25mm, 0.65mm respectively, an average pore diameter of 0.06 µm, and a porosity of 80%. The compressive strength of the microporous hollow fiber membrane was more than 0.5Mpa, and the water flux per unit wall thickness was 750L/m2.h.25°C.1bar.

### EXAMPLE 13

Example 1 was repeated to prepare a microporous hollow fiber membrane except for 20.5% by weight of polyvinylidene fluoride resin (SOLEF6020 as trade name available from Solvay,) having a molecular weight of 400,000 daltons; 10.5% by weight of polyvinylpyrrolidone having a molecular weight of 45,000 daltons (PVP K-30 as trade name available from Shanghai Shenpu Co.,); 10% by weight of PEG-300 (imported from Japan); 1.5% by weight of polyvinyl alcohol; 5% by weight of 20% sodium acetate aqueous solution; 52.5% by weight of dimethylacetamide (available from BASF Co.,).

The resulting extrudate was evaporated while passing it through the air for a short time of 0.2s, passed through the first stage coagulating bath for 2.0s, which containing 80% by weight of solvent of PVDF resin, and then through the second coagulating bath containing 20% by weight of solvent of PVDF resin for 4s.

The prepared hollow fiber membrane has double skins which are internal and external, and a complete sponge-structure supporting layer in the cross-section.

The microporous hollow fiber membrane of the present invention had an outer and inner diameter of 1.25mm, 0.65mm respectively, an average pore diameter of 0.055 µ m, and a porosity of 80%. The compressive strength of the microporous hollow fiber membrane was more than 0.5Mpa, and the water flux per unit wall thickness was 460L/m2.h.25°C.1bar.

### EXAMPLE 14

Example 1 was repeated to prepare a microporous hollow fiber membrane except for 19.0% by weight of polyvinylidene fluoride resin (SOLEF6030 as trade name available from Solvay,) having a molecular weight of 500,000 daltons; 9.0% by weight of polyvinylpyrrolidone having a molecular weight of 45,000 daltons (PVP K-17 as trade name available from Shanghai Shenpu Co.,); 11% by weight of PEG-300 (imported from Japan); 4% by weight of polyvinyl alcohol; 2.0% by weight of Tween-80(imported from Japan); 5% by weight of triethyl phosphate (C.P.); 50.0% by weight of dimethylacetamide (available from BASF Co.,).

The resulting extrudate was evaporated while passing it through the air for a short time of 0.15s, passed through the first stage coagulating bath for 2.5s, which containing 50% by weight of solvent of PVDF resin, and then through the second coagulating bath containing 25% by weight of solvent of PVDF resin for 120s.

The prepared hollow fiber membrane has double skins which are internal and external, and a complete sponge-structure supporting layer in the cross-section.

The microporous hollow fiber membrane of the present invention had an outer and inner diameter of 1.20mm, 0.60mm respectively, an average pore diameter of 0.015 µ m, and a porosity of 75%. The compressive strength of the microporous hollow fiber membrane was 0.5Mpa, and the water flux per unit wall thickness was 450L/m2.h.25°C.1bar.

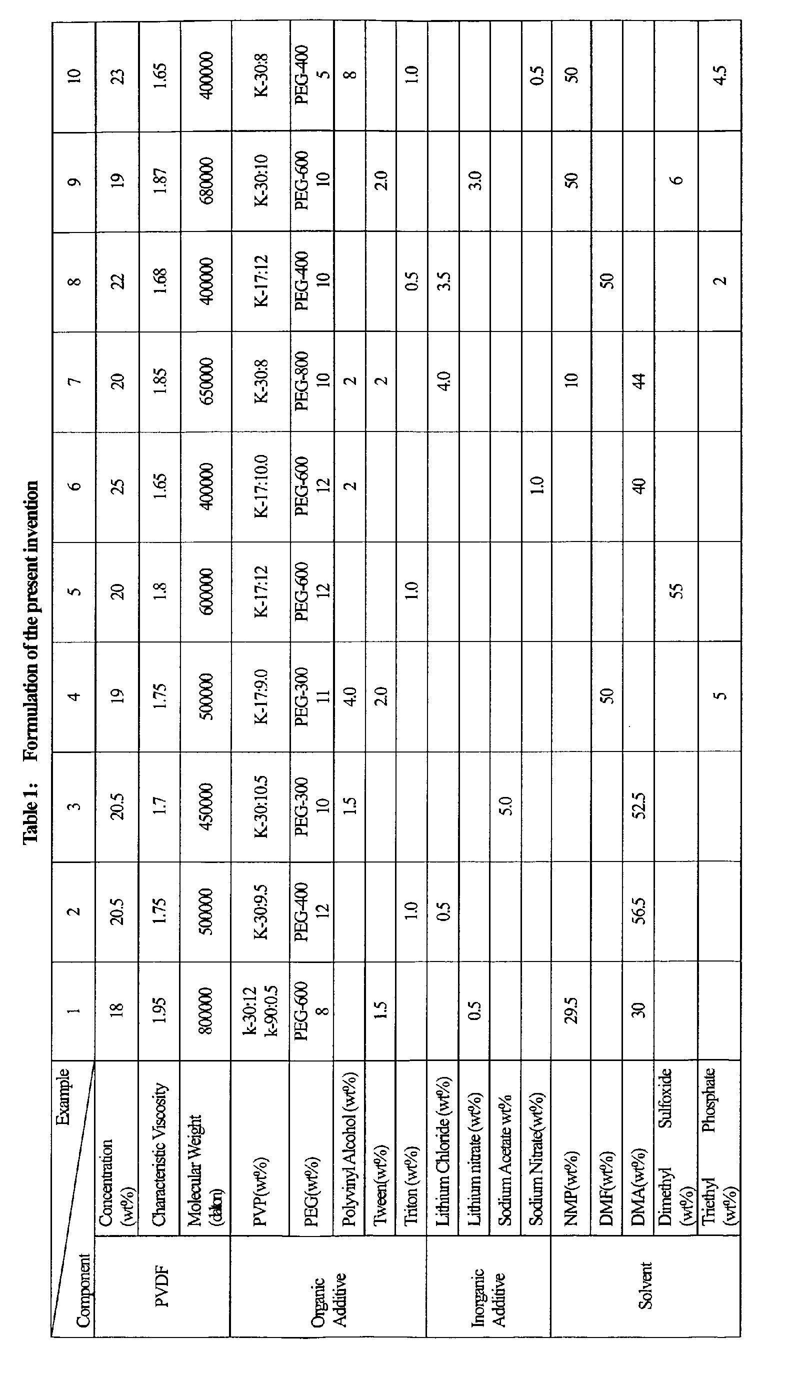

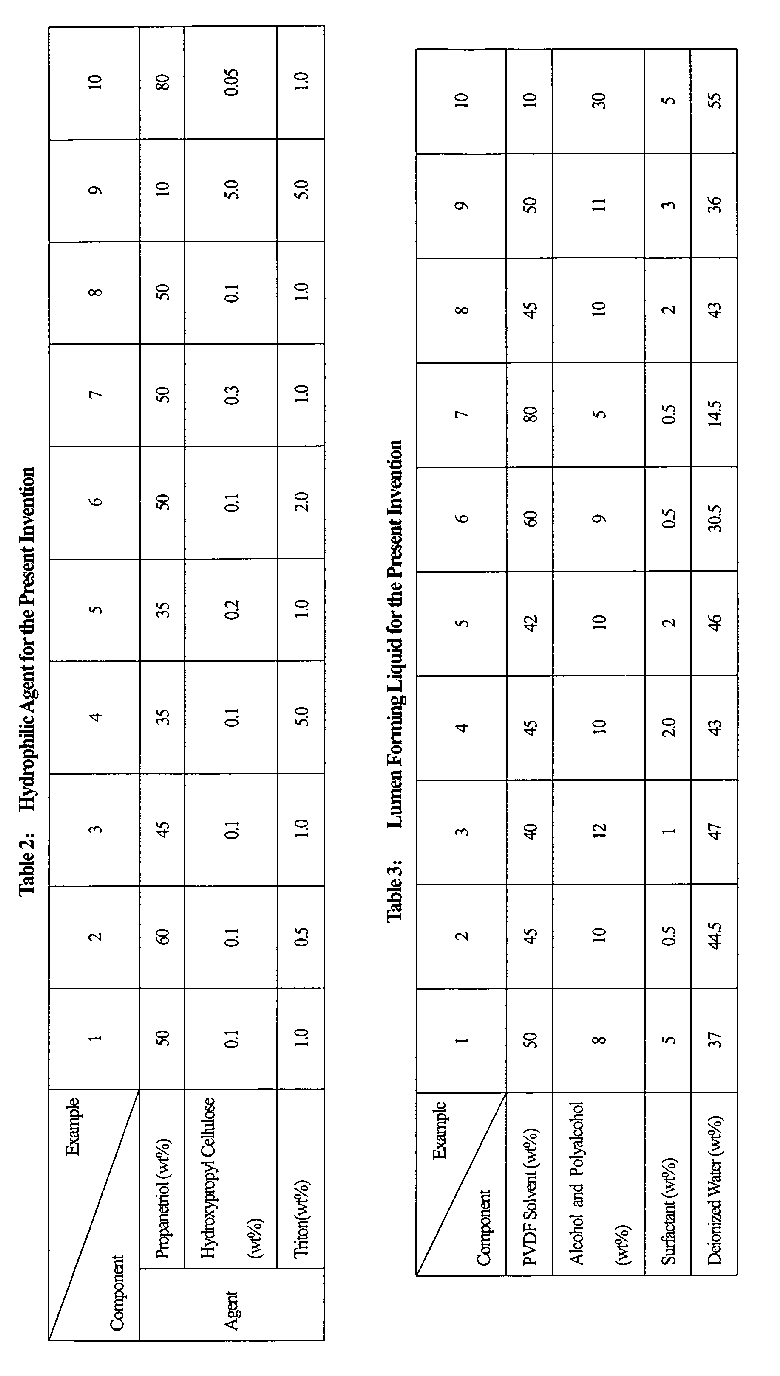

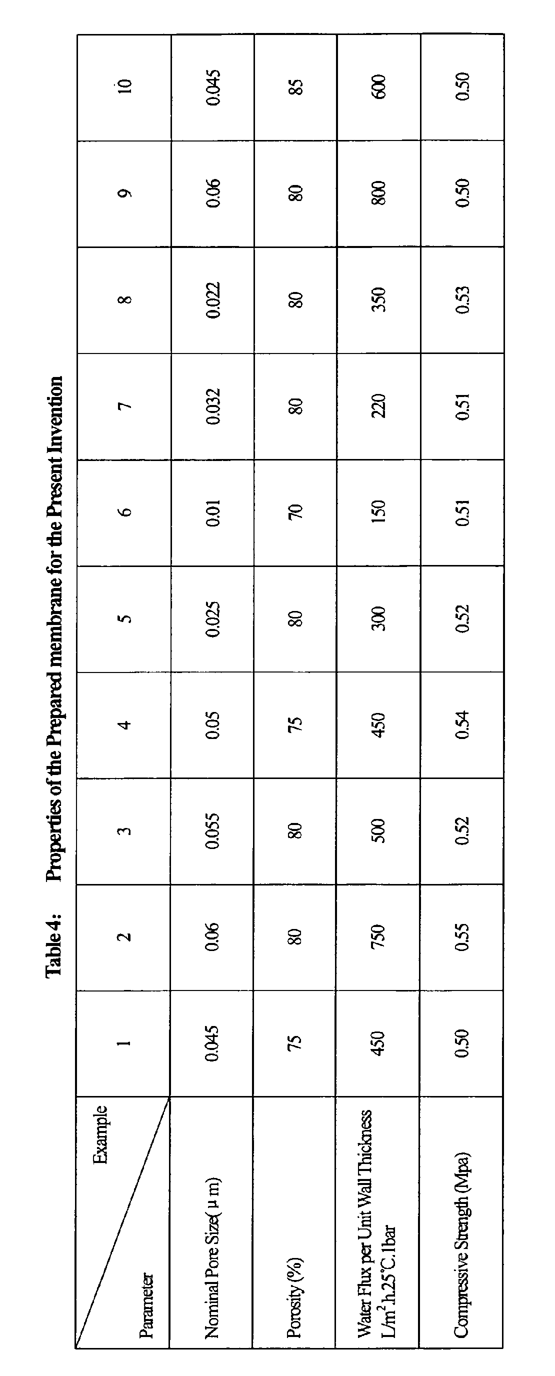

## Claims

1. A method to prepare a microporous outside-in PVDF hollow fiber membrane which is spinned by immersion and coagulation,comprises:
a. preparing polymer solution by introducing the following material into a mixer, dissolving and stirring it at a certain temperature:
| | |
|---|---|
| Polyvinylidene Fluoride | 18-25%(wt); |
| Organic additives | 22-25%(wt); |
| Inorganic additives | 0.5-5.0%(wt); |
| Solvent | 59.5-45.0%(wt). |
b. extruding the said solution through outer tube of a double tube spinneret, and lumen forming composition liquid through inner tube of the same simultaneously;
c. obtaining original fiber membrane by introducing and immersing the extruded polymer solution as well as the lumen liquid into a first stage coagulation bath, and consequently into a second coagulation bath after quick evaporization, wherein a precipitation takes place via phase inversion in the said two baths respectively;
d. passing the original membrane through a rinsing bath, subjecting it to hydrophilic rendering; then an outside-in hollow fiber with double skins and complete spongy network is prepared.

2. The method of claim 1, wherein the said organic additives consists of at least two of the groups of polyvinylpyrrolidone, polyethylene glycol, polyvinyl alcohol, Tween and Triton; If the additives are more than two kinds, the total amount is constant.

3. The method of claim 1, wherein the said inorganic additives is selected at least one from the group comprising lithium chloride, lithium nitrate and sodium acetate solution; If the additives are more than two kinds, the total amount is constant.

4. The method of claim 1, wherein the said solvent is selected at least one from the group comprising N-Methyl Pyrrolidone, dimethylformamide, dimethylacetamide, dimethyl sulfoxide and triethyl phosphate; If the solvent is more than two kinds, the total amount is constant.

5. The method of claim 1, wherein the said lumen forimg liquid comprising 10-80% by weight of solvent of PVDF, 5-30% by weight of alcohol and polyalcohol, 0.5-5% by weight of surfactant and other is deionized water.

6. The method of claim 1, Wherein the molecular weight(Mw) of the polyvinylidene fluoride resins ranges from 400,000 to 800,000 daltons, and a characteristic viscosity ranges from 1.65-2.00.

7. The method of claim 1, wherein the characteristic viscosity for the said PVDF resin is 1.75-1.85, the molecular weight of the said PVDF resin is 500,000 to 700,000 Dalton; if there is more than one kind of PVDF, the total amount is constant.

8. The method of claim 1 or 2 or 3 or 4 or 5 or 6 or 7, wherein the said organic additive is polyvinylpyrrolidone, having a molecular weight ranging from 11,000 to 1,000,000 daltons, and the concentration for the said organic additive is 22-25%(wt).

9. The method of claim 1 or 2 or 3 or 4 or 5 or 6 or 7, wherein the evaporation time is preferably ranging from 0.02s to 0.2s; the said first stage coagulating bath preferably comprises 40-80% by weight of solvent of PVDF resin in which the time of coagulation is 1.5s to 4.0s; and the said second stage coagulating bath preferably comprises 40-80% by weight of solvent of PVDF resin in which the time of coagulation is 4.0s to 120s.

10. The method of claim 1 or 2 or 3 or 4 or 5 or 6 or 7, wherein the said hydrophilic agent is selected at least one or more from the group comprising 10-80% by weight of propanetriol, 0.05-5% by weight of hydroxypropyl cellulose and 0.5-5% by weight of Triton.

11. The method of claim 8, wherein the said hydrophilic agent is selected at least one or more from the group comprising 10-80% by weight of propanetriol, 0.05-5% by weight of hydroxypropyl cellulose and 0.5-5% by weight of Triton.

12. The membrane of claim 1 or 2 or 3 or 4 or 5 or 6 or 7, wherein the said hollow fiber has double skins which are internal and external and a complete sponge network supporting layer in the cross-section; the external skin is denser than the internal one; the microporous hollow fiber membrane has an average pore diameter ranging from 0.01 µ m to 0.06 µ m, and water flux per unit wall thickness of 150 to 800L/m2.h.25 °C.1bar, porosity of 70-85%, compressive strength of more than 0.5Mpa.

13. The membrane of claim 8, wherein the said hollow fiber has double skins which are internal and external and a complete sponge network supporting layer in the cross-section; the external skin is denser than the internal one; the microporous hollow fiber membrane has an average pore diameter ranging from 0.01 µ m to 0.06 µ m, and water flux per unit wall thickness of 150 to 800L/m2.h.25°C.1bar, porosity of 70-85%, compressive strength of more than 0.5Mpa.
